# EUROPÄISCHE PATENTSCHRIFT

(11) **EP 0 795 558 B1**
(45) Veröffentlichungstag und Bekanntmachung des Hinweises auf die Patenterteilung: **04.09.2002**
(21) Anmeldenummer: 97103443.4
(22) Anmeldetag: 03.03.1997
(51) Int. Cl.: C07F 7/18, C01B 17/34, C01B 17/38

(54) **Verfahren zur Herstellung von polysulfidischen Silylethern**
Process for the preparation of polysulfidic silylethers
Procédé de préparation de silyléthers polysulfurés

(30) Priorität: 15.03.1996 DE 19610281
(43) Veröffentlichungstag der Anmeldung: 17.09.1997
(73) Patentinhaber: BAYER AG, 51368 Leverkusen (DE)
(72) Erfinder: Scholl, Thomas, Dr., 51469 Bergisch Gladbach (DE)

(56) Entgegenhaltungen:
- EP-A- 0 403 755
- US-A- 5 399 739
- US-A- 5 466 848
- CHEMICAL ABSTRACTS, vol. 124, no. 9, 26.Februar 1996 Columbus, Ohio, US; abstract no. 117584, YAMATANI M ET AL: "Preparation of organosilicon compounds having polysulfide linkage" XP002033082 & JP 07 228 588 A (SHINETSU CHEM IND CO;JAPAN) 29.August 1995

## Beschreibung

Die vorliegende Erfindung betrifft ein Verfahren zur Herstellung von polysulfidischen Silylethern durch Umsetzung von Metallpolysulfiden mit Halogenalkylsilanen.

Polysulfidische Silylether, insbesondere Bis-(triethoxysilylpropyl)-tetrasulfid, werden in der Kautschukindustrie häufig eingesetzt, z.B. in Kautschukmischungen, die helle Füllstoffe enthalten. Die polysulfidischen Silylether schaffen eine chemische Bindung zwischen Füllstoff und Kautschuk und erhöhen so das Verstärkungsniveau der hellen Füllstoffe. In DE-A 2 141 159 und 2 255 577 sowie in DE-A 4 406 947 sind derartige polysulfidische Silylether beschrieben. Nachteilig bei der Herstellung der polysulfidischen Silylether ist dabei das Arbeiten mit wasserfreiem Metallsulfid, z.B. Natriumsulfid, um die entsprechenden Silylethergruppen vor der Hydrolyse zu bewahren.

Zur Herstellung von z.B. wasserfreiem Natriumsulfid sind eine Reihe von Verfahren bekannt, die allesamt technisch aufwendig sind und/oder von teuren Rohstoffen ausgehen: So beschreibt die US-A-5 466 848 ein Herstellungsverfahren von Natriumsulfid aus Metallalkoholat und Schwefelwasserstoff. Die Reaktion verläuft glatt und mit guten Ausbeuten, sie erfordert jedoch ein teures Metallalkoholat. Ein ähnliches Verfahren beschreibt DE-A 2 712 866, wonach ein Metallhydrogensulfid mit einem Metallalkoholat zur Reaktion gebracht wird. Das entstehende (wasserfreie) Metallsulfid wird ohne zu isolieren weiter umgesetzt. In DE-A 3 913 257 und 3 913 259 werden Verfahren zur Herstellung von Natriumsulfid aus Natrium und Schwefel beschrieben. Diese Reaktion stellt sehr hohe technische Anforderungen aufgrund der extremen Reaktivität des Natriums gegenüber Luft und Wasser. Ein Verfahren zur Herstellung von Natriumsulfid aus Natriumpolysulfid und Natrium beschreibt DE-A 3 913 258, wobei die technischen Anforderungen aufgrund des hier ebenfalls verwendeten elementaren Natriums nicht minder hoch sind. Wasserfreies Natriumsulfid wird auch im Zuge der Polyphenylensulfidproduktion in hochsiedenden wassermischbaren Lösungsmitteln, wie N-Methylpyrrolidon, durch Entwässerung von wasserhaltigem Natriumsulfid hergestellt. Derartige Lösungsmittel sind so hochsiedend, daß sie praktisch nur noch durch wäßrige Extraktion aus dem Produktgemisch entfernt werden können und daher zur Herstellung von hydrolyseempfindlichen Produkten ungeeignet sind. Führt man die Entwässerung in nicht wassermischbaren Lösungsmitteln, wie z.B. Toluol, Xylol oder Amylalkohol und Cyclohexanol durch, so erhält man Abscheidungen von festem, wasserfreiem Natriumsulfid, die ohne weitere mechanische Zerkleinerung nicht weiter zur Reaktion zu bringen sind.

In US-A-5,399,739 wird ein Verfahren zur Herstellung von schwefelhaltigen Organosilanen beschrieben, welches auf der Reaktion eines Alkalimetallsulfids mit Schwefel und einem Halogenalkylsilan beruht.

Aus Chem. Abstracts, vol. 124, no. 9,26.02.1996; abstr. no. 117584 & JP-A-07228588 ist bekannt ein Verfahren zur Herstellung von polysulfidischen Silylethern durch Umsetzung von Metallpolysulfiden mit Halogenalkylsilanen, wobei die entwässerten Metallpolysulfide durch Umsetzung von Metallsulfid und Schwefel in Methanol hergestellt werden.

Die im US-Patent und in der japanischen Anmeldung beschriebenen Verfahren sind jedoch aufgrund der beschriebenen Herstellungsweise technisch aufwendig.

Es bestand daher die Aufgabe ein einfaches und technisch sicheres Verfahren zur Herstellung von polysulfidischen Silylethern zur Verfügung zu stellen, ausgehend von wasserhaltigen Metallsulfiden und/oder Metallpolysulfiden.

Gegenstand der vorliegenden Erfindung ist daher ein Verfahren zur Herstellung von polysulfidischen Silylethern durch Umsetzung von Metallsulfiden mit Halogenalkylsilanen, das dadurch gekennzeichnet ist, daß man ausgehend von wasserhaltigen Metallsulfiden und/oder Metallpolysulfiden diese zunächst in Gegenwart eines nicht wassermischbaren, organischen Lösungsmittels und in Gegenwart eines Emulgators der nachstehenden allgemeinen Formeln (Ia) und/oder (Ib) und/oder (Ic)

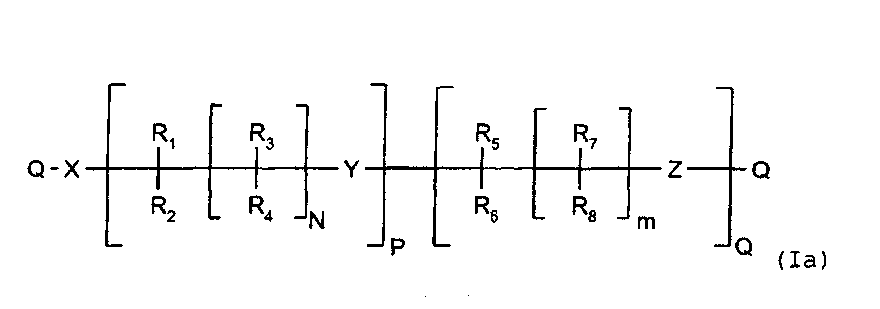

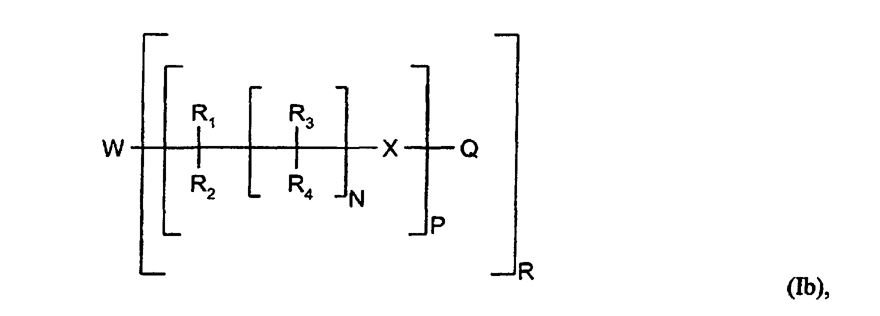

R₉-(V-Q)_{R} (Ic),

worin
- R₁-R₈: unabhängig voneinander fiir Wasserstoff, OH, NH₂, Carbonsäure-, Sulfonsäure-, Phosphorsäure- und Phosphonsäureguppen und deren Salze, für C₁-C₃₆-Alkyl- oder Cycloalkylreste, die gegebenenfalls durch Sauerstoff-, Schwefel- oder Stickstoffatome unterbrochen oder durch weitere -OH, -NH₂, -NH-C₁-C₁₂-Alkylreste, -N(C₁-C₁₂-Alkylreste)₂, Carbonsäure-C₁-C₁₂-Alkylester, Carbonsäure-, Sulfonsäure-, Phosphorsäure- oder Phosphonsäuregruppen sowie deren Salze substituiert sein können, sowie für C₆-C₁₈-Aryl und C₇-C₂₄-Alkylarylgruppen stehen, wobei zwei benachbarte Reste jeweils auch ein cyclisches Ringsystem mit 5 bis 8 C-Atomen bilden können,
- R₉: für einen C₁-C₃₆-Alkyl- oder Cycloalkylrest steht, der gegebenenfalls durch Sauerstoff-, Schwefel- oder Stickstoffatome unterbrochen sein kann, sowie für C₆-C₁₈-Aryl und C₇-C₂₄-Alkylarylgruppen steht,
- X, Y, Z: für Sauerstoff, -NH- oder -NR₁-, wobei R₁ die obengenannte Bedeutung hat, oder fiir Schwefel, für eine Gruppe der Reihe -Sₓ- (mit x = 2-8), sowie für eine Sulfonyl-, Carbonyl-, Sulfonat-, Carboxylat-, Phosphonat- oder Phosphatgruppe stehen,
- W: für eine Hydroxylgruppe, einen ein- bis sechswertigen C₁-C₂₄-aliphatischen-, C₅-C₂₄-cycloaliphatischen- oder C₆-C₂₄-aromatischen Kohlenwasserstoff- oder für einen Alkoholatrest, eine Aminogruppe oder eine NH(C₁-C₁₈)-, N(C₁-C₁₈)₂-, N⁺(C₁-C₂₄)₄-Alkyl-, -Alkylaryl- oder -Arylgruppe oder einen Poly-(C₂-C₁₈-alkylen)-polyaminrest, mit einem mittleren Molekulargewicht von 60 bis 100000, für eine Carbonylgruppe, einen ein- bis sechswertigen aliphatischen, cycloaliphatischen oder aromatischen (C₁-C₃₆)-(COO-)_{y}-Rest (mit y = 1 bis 6) oder eine Carbonsäuregruppe, Phosphonsäuregruppe, Phosphorsäuregruppe oder Sulfonsäuregruppe oder deren Salze steht,
- V: für eine Carboxylat-, Sulfonat- oder Phosphatgruppe steht,
- Q: für Wasserstoff oder ein Metall der 1., 2. oder 3.-Hauptgruppe des Periodensystems der Elemente (Mendelejew) steht,
- n,m: unabhängig voneinander für ganze Zahlen zwischen 0 - 21, bevorzugt 1 -10 steht,
- p: eine ganze Zahl zwischen 1 - 1 000, bevorzugt 1 bis 20 bedeutet,
- q: eine ganze Zahl zwischen 0 - 6, bevorzugt 0 bis 4 bedeutet und
- r: für eine ganze Zahl zwischen 1 - 6, bevorzugt 1 bis 4 steht
bei Temperaturen von 90 bis 220°C, gegebenenfalls im Vakuum oder unter Druck, entwässert, anschließend bei Einsatz von Metallsulfiden diese mit Schwefel zu Metallpolysulfiden umsetzt und danach die erhaltenen, entwässerten Metallpolysulfide mit Halogenalkylsilanen, gegebenenfalls in Gegenwart von Polyhalogenverbindungen, bei Temperaturen von 20 bis 150°C in die entsprechenden polysulfidischen Silylether überführt, wobei die Emulgatoren in Mengen von 0,1 - 300 Gew.-%, bezogen auf wasserfreies Metallsulfid und/oder Metallpolysulfid eingesetzt werden.

Gemäß dem erfindungsgemäßen Verfahren geht man von wasserhaltigen Metallsulfiden und/oder Metallpolysulfiden, wie z.B. den technisch in großen Mengen verfügbaren Natriumsulfid-trihydraten oder Natriumsulfid-nonohydraten aus.

Zur Entwässerung der wasserhaltigen Metallsulfiden bzw. Metallpolysulfiden arbeitet man in Gegenwart eines organischen Lösungsmittels und in Gegenwart eines hierfür geeigneten Emulgators.

Bevorzugte Reste R¹ bis R⁸ der o. g. allgmeinen Formeln (Ia), (Ib) und (Ic) sind z.B. Wasserstoff, Methyl, Ethyl, Propyl, Butyl, Hydroxymethyl, 2-Hydroxyethyl, 2-Hydroxypropyl, Amino, Methylamino, Ethylamino, Carboxyl, Carbonsäuremethylester, Carbonsäureethylester, Sulfoxyl und deren Salze.

Bevorzugte Reste X, Y, Z sind z.B. Sauerstoff-, Amino-, Methylamino-, Ethylamino-, Thio-, Dithio-, Phosphat- und Sulfonatreste.

Bevorzugte Reste W sind z.B. Hydroxyl, Methyl, Ethyl, Propyl, Butyl, Pentyl, Hexyl, Octyl, Phenyl, Benzyl sowie Alkoholatreste, wie Methanolat, Ethanolat, Propanolat, Butanolat, Cyclohexanolat, Octanolat, Dodecanolat, Octadecanolat, Phenolat, Nonylphenolat, 4,4'-Isopropyliden-bis-phenolat, und die Alkoholatreste von Trimethylpropan, Pentaerythrit, Sorbit, ferner Amino, Methylamino, Ethylamino, Propylamino, Butylamino, Cyclohexylamino, Stearylamino, Benzylamino, Phenylamino, Naphthylamino oder auch Ethylendiamino, Diethylentriamino, Triethylentetramino, Tetraethylenpentamino, Pentaethylenhexamino und Carbonsäurereste, wie Acetat, Propionat, Butyrat, Dodecanat, Stearat, Oxalat, Malonat, Succinat, Dodecandicarboxylat, Dimerfettdicarboxylat, Benzoat, Phthalat, Trimellithat.

Bevorzugte Reste Q sind Wasserstoff, Li, Na, K, Mg, Ca, Al.

Bevorzugte Verbindungen der Formeln (Ia), (Ib) und (Ic) sind Ethylenglykol, Diethylenglykol, Triethylenglykol, Tetraethylenglykol, Octaethylenglykol, Thiodiethanol, Dithiodiethanol, 1.2-Propylenglykol, Di-, Tri-, Tetrapropylenglykol, 1.3-Dihydroxypropan, 1.5-Dihydroxypentan, Polytetrahydrofurane mit mittleren Molgewichten von 190 bis 15 000, 1,2-Butandiol, 1,3-Butandiol, 1,4-Butandiol, 2,3-Butandiol, Neopentylglykol, 1,6-Hexandiol, 2,5-Hexandiol, 2-Methyl-2,4-pentandiol, 2-Ethyl-1,3-hexandiol, 1,2,6-Hexantriol, Trimethylolpropan, Pentaerythrit, Sorbit, Mannit, 2,2-Bis-(hydroxymethyl)propionsäure, Apfelsäure, Weinsäure, Citronensäure, Ethylhexansäure, Bernsteinsäure und deren Salze sowie Polyethylenoxide mit mittleren Molekulargewichten von bis 15 000 sowie Copolymere aus Ethylenoxid und Propylenoxid mit Molekulargewichten von 100 und 10 000, sowie Addukte von 1 bis 1 000 Mol Ethylenoxid und/oder eines C₃-C₁₈-Alkylenoxids an einen mehrwertigen Alkohol, wie Ethylenglykol, 1.2-Propylenglykol, Trimethylolpropan, Pentaerythrit, Sorbit, sowie Addukte von 1 bis 1 000 Mol Ethylenoxid und/oder eines C₃-C₁₈-Alkylenoxids an Amine und Polyamine, wie Ammoniak, Methylamin, Ethyl-, Propyl-, Butyl-, Cyclohexyl-, Octyl-, Decyl-, Dodecyl-, Stearylamin, Talgfettamin oder an Morpholin; Piperidin, Piperazin, Ethylendiamin, Diethylentriamin, Teetraethylenpentamin, Pentaethylenhexamin, oder auch Polyethylenpolyamine mit höherem Molekulargewicht (1000 bis 50.000), wobei das Molekulargewicht im Prinzip unbegrenzt hoch sein kann und nur durch die Verarbeitbarkeit eingeschränkt wird. Weitere Verbindungen sind Polyester, wie Polyester aus Diethylenglykol, Triethylenglkol, Tetraethylenglykol oder höheren Polyethylenglykolen mit Oxalsäure, Malonsäure Maleinsäure, Fumarsäure, Bernsteinsäure, Glutarsäure, Adipinsäure, Azelainsäure, Dodecandisäure, Dimerfettsäure, Phtalsäure, Isophthalsäure, Terephthalsäure, Trimellithsäure, Naphthalindicarbonsäure.

Besonders bevorzugte Verbindungen sind Ethylenglykol, Diethylenglykol, Triethylenglykol, Tetraethylenglykol, Octaethylenglykol, Thiodiethanol sowie höhermolekulare Polyethylenoxide und Mischpolymerisate aus Ethylenoxid mit Propylenoxid mit mittleren Molekulargewichten bis ca. 10.000 und Ethylenoxid/Propylenoxid-Verhältnissen von 1 : 0 bis 1 : 1, ferner Ethylendiamin, Propylendiamin und höhere Homologe, wie Diethylentriamin, Triethylentetramin, Tetraethylenpentamin, Pentaethylenhexamin und höhermolekulare Polyethylenpolyamine mit Molgewichten bis 100.000 sowie Addukte von Ethylenoxid und/oder Propylenoxid an Ethylendiamin, Diethylentriamin, Triethylentetramin, Tetraethylenpentamin, Pentaethylenhexamin und höhermolekulare Polyethylenpolyamine, mit Molverhältnissen von Alkylenoxid zu Polyalkylenpolyamin von 10.000 : 1 bis 0,01 zu 1. Ferner höherwertige Alkohole wie Glycerin, Trimethylolpropan, Pentaerythrit und Sorbit sowie deren Umsetzungsprodukte mit bis zu 100 mol Ethylenoxid pro Hydroxylgruppe.

Insbesondere eignen sich als Emulgatoren der Formel (I) und (II): Ethylenglykol, Diethylenglykol, Triethylenglykol, Tetraethylenglykol, Propylenglykol, Dipropylenglykol, Tripropylenglykol, Tetrapropylenglykol, Trimethylolpropan, Pentaerythrit, N-Methyldiethanolamin und/oder Ethylhexansäure.

Die eingesetzte Menge an Emulgatoren ist von der Struktur und der Wirksamkeit der Emulgatoren abhängig. Die günstigste Menge kann leicht durch entsprechende Vorversuche ermittelt werden. Da die Emulgatoren über funktionelle Gruppen, z.B. Hydroxylgruppen, verfügen, die mit den Silylethergruppen reagieren können, sollten nicht zu große Mengen verwendet werden, da ansonsten vernetzte und in organischen Lösungsmitteln unlösliche polysulfidische Silylether entstehen können. Im allgemeinem werden die Emulgatoren in Mengen von 0,1 bis 300 Gew.-%, bezogen auf wasserfreies Metallsulfid und/oder Metallpolysulfid, eingesetzt. **Bevorzugt** werden die Emulgatoren in Mengen von 0,1 bis 100 Gew.-%, bezogen auf wasserfreies Metallsulfid und/oder Metallpolysulfid, eingesetzt, **ganz bevorzugte** Emulgatormengen liegen im Bereich von 0,5 bis 20 Gew.-%, bezogen auf wasserfreies Metallsulfid und/oder wasserfreies Metallpolysulfid.

Neben den bereits genannten Natriumsulfiden können für das erfindungsgemäße Verfahren auch andere Metallsulfide bzw. Polysulfide eingesetzt werden wie Alkalimetallsulfide oder Erdalkalisulfide bzw. die Alkalimetallpolysulfide oder Erdalkalipolysulfide. Diese können sowohl in Form ihrer Hydrate als auch in Form von wäßrigen Lösungen eingesetzt werden. Als Alkalimetallsulfide kommen beispielsweise neben Natriumsulfid noch Lithiumsulfid sowie die entsprechenden Polysulfide in Frage, als Erdalkalisulfide Magnesiumsulfid und Calciumsulfid sowie die entsprechenden Polysulfide.

Unter "organischen, nicht wassermischbaren Lösungsmitteln" werden solche Lösungsmittel verstanden, die nicht zu jedem Verhältnis mit Wasser mischbar sind.

Als organische Lösungsmittel für die Behandlung der wasserhaltigen Metallsulfide und/oder wasserhaltigen Metallpolysulfide kommen beispielsweise aromatische Kohlenwasserstoffe, wie Toluol, Xylol, Mesitylen, oder aliphatische Kohlenwasserstoffe, wie Methylcyclohexan, Octan, Dodecan, oder Alkohole, wie n-Butanol, Amylalkohol, Cyclohexanol in Frage. Die Lösungsmittel können sowohl einzeln als auch im Gemisch untereinander eingesetzt werden.

Nach dem erfindungsgemäßen Verfahren wird die Behandlung der wasserhaltigen Alkalisulfide bzw. Alkalipolysulfide mit den genannten Emulgatoren und den Lösungsmitteln in vorteilhafter Weise am Wasserabscheider durchgeführt unter Rückführung des Lösungsmittels.

Die Menge an Lösungsmittel ist nicht kritisch und kann leicht durch entsprechende Vorversuche bestimmt werden. Üblicherweise werden die Lösungsmittel in Mengen von 2 bis 20 Gew.-Teilen, bevorzugt 3 bis 10 Gew.-Teilen, bezogen auf 1 Gew.-Teil wäßriges Metallsulfid bzw. Polysulfid eingesetzt.

Die Entwässerung der Metallsulfide bzw. Metallpolysulfide wird üblicherweise bei Temperaturen von 90 bis 220°C, bevorzugt 100 bis 200°C, gegebenenfalls in Vakuum (0,1-1 bar) oder unter Druck (1-5 bar) durchgeführt.

Nachdem das wasserhaltige Metallsulfid bzw. wasserhaltige Metallpolysulfid wie vorstehend beschrieben entwässert wurde, wird bei Einsatz von Metallsulfiden die entwässerten Metallsulfide mit Schwefel zu Metallpolysulfiden umgesetzt.

Die Umsetzung der Metallsulfide mit Schwefel zu Metallpolysulfiden kann dabei nach üblichen Methoden ausgeführt werden, beispielsweise durch kurzzeitiges Erhitzen der Einzelkomponenten in einem polaren Lösungsmittel. Derartige Umsetzungen sind in der voran zitierten Patentschrift US-A-5.466.848 und DE-A 4.406.947 beschrieben.

Nach dem erfindungsgemäßen Verfahren werden nun die erhaltenen, entwässerten Metallpolysulfiden mit Halogenalkylsilanen, gegebenenenfalls in Gegenwart von Polyhalogenverbindungen, in die entsprechenden polysulfidischen Silylether überführt. Dabei betragen die Temperaturen bevorzugt 20 bis 100°C.

Nach dem erfindungsgemäßen Verfahren ist es möglich, die entwässerten Metallsulfide bzw. Metallpolysulfide ohne die bei der Entwässerung verwendeten Emulgatoren und ohne die dabei verwendeten Lösungsmittel zu entfernen, direkt mit den Halogenalkylsilanen, gegebenenfalls in Gegenwart von Polyhalogenverbindungen, umzusetzen. Dabei werden die bei der Entwässerung eingesetzten Emulgatoren ganz oder teilweise in die herzustellenden polysulfidischen Silylether eingebaut.

Selbstverständlich ist es auch möglich, die Emulgatoren und die verwendeten Lösungsmittel vor der Umsetzung der Metallpolysulfide mit den Halogenalkylsilanen zu entfernen.

Als Halogenalkylsilane kommen dabei solche der Formel (II) in Frage: 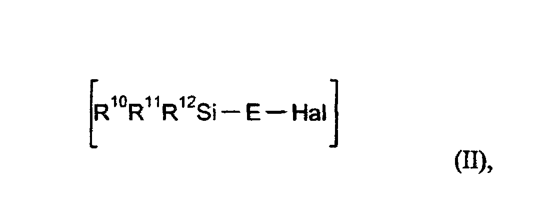 worin
- R⁹, R¹⁰ und R¹¹: gleich oder verschieden sind und für C₁-C₁₈-Alkyl- oder C₁-C₁₈-Alkoxireste stehen, die gegebenenfalls durch Sauerstoff, Stickstoff- oder Schwefelatome unterbrochen sein können, oder C₆-C₁₂-Phenyl sowie -Phenoxi oder C₇-C₁₈-Alkylaryl sowie -Alkylaryloxi bedeuten,
- E: für lineare, verzweigte oder cyclische, gegebenenfalls ungesättigte C₁-C₁₈-Alkylenreste steht, die gebenenfalls durch Sauerstoffatome unterbrochen sein können, und
- Hal: für Fluor, Chlor oder Brom steht.

Besonders bevorzugte Halogensilane sind solche der Formel (II),
worin R⁹, R¹⁰ und R¹¹ unabhängig voneinander für C₁-C₁₈-Alkylreste, C₁-C₁₈-Alkoxireste, die jeweils noch durch Sauerstoff- oder Schwefelatome unterbrochen sein können, oder für C₆-C₁₂-Aryl- oder C₆-C₁₂-Aryloxireste stehen, und worin E für lineare, verzweigte oder cyclische, C₁-C₁₈-Alkylenreste steht, die gegebenenfalls durch Sauerstoffatome unterbrochen sein können, und in denen Hal für Fluor, Chlor oder Brom steht.

Beispiele fiir Verbindungen der Formel (II) sind insbesondere 1-Chlormethyltrimethoxisilan, 1-Chlormethyltriethoxisilan, 1-Chlormethyltributoxisilan, 1-Chlormethyl-triethoxiethoxisilan, 1-Chlormethyl-methyl-dimethoxisilan, 1-Chlormethylmethyl-diethoxisilan, 1-Chlormethyl-methyl-dibutoxisilan, 1-Chlormethyl-dimethylmethoxisilan, 1-Chlormethyl-dimethyl-ethoxisilan, 1-Chlormethyl-dimethyl-butoxisilan, 3-Chlorpropyltrimethoxisilan, 3-Chlorpropyltriethoxisilan, 3-Chlorpropyltripropoxisilan 3-Chlorpropyltributoxisilan, 3-Chlorpropylpentoxisilan, 3-Chlorpropyltrihexoxisilan, 3-Chlorpropyltrioctoxisilan, 3-Chlorpropyl-(trimethoxyethoxi)-silan 3-Chlorpropyl-(triethoxyethoxi)-silan, 3-Chlorpropyl-triphenoxisilan, 3-Chlorpropylmethyldimethoxisilan, 3-Chlorpropyl-methyl-diethoxisilan, 3-Chlorpropyl-methyl-dibutoxisilan, 3-Chlorpropyl-dimethyl-methoxisilan, 3-Chlorpropyl-dimethyl-ethoxisilan und 3-Chlorpropyl-diethyl-phenoxisilan, bevorzugt Chlorpropyltriethoxysilan, Chlorpropyl-methyl-diethoxysilan, Chlormethyl-methyl-diethoxysilan.

Als Polyhalogenverbindungen kommen solche der Formel (III) in Frage:

G(Hal)ₛ (III),

worin
- G: für gegebenenfalls mit C₆-C₁₂-Aryl-, C₁-C₁₈-Alkoxi- oder Hydroxigruppen, C₁-C₁₇-COO-, oder C₁-C₁₈-OOC-Gruppen substituierte, lineare, verzweigte oder cyclische, gegebenenfalls ungesättigte, C₁-C₁₈-Alkylen- oder -Alkylreste steht, die gegebenenfalls durch Sauerstoff-, Schwefel-, Stickstoffatome oder aromatische C₆-C₁₂-Gruppen unterbrochen sein können, sowie für C₆-C₁₂-Arylen- oder Arylgruppen oder -Heteroarylen- oder Arylgruppen steht,
- s: eine Zahl von 1 bis 6 und
- Hal: für Fluor, Chlor oder Brom steht.

Bevorzugte Polyhalogenverbindungen (III) sind z.B.: Alkylmonohalogenide, wie Methylchlorid, Ethylchlorid, Propylchlorid, Butylchlorid, Hexylchlorid, Octylchlorid, Dodecylchlorid, Octadecylchlorid, Benzylchlorid, Chorethanol, Chlorpropanol, und besonders Alkylendihalogenide, in denen G Methylen-, Ethylen-, Propylen-, 2-Hydroxipropylen-, Butylen, Hexylen, Cyclohexylen-, Octylen-, Decyclen-, Dodecyclen-, 2,2'-Oxidiethylen-, Methylen-bis-(2,2'-oxiethylen)-, Ethylen-(bis-2,2'oxiethylen)-, 2,2'-Thiodiethylen-, N-Methyl-N',N"-diethylen- oder , -p-Xylidenreste darstellt. Geeignete höherwertige Polyhalogenverbindungen sind z.B.: 1.2.3-Trichlorpropan und 1.3.5-Trichlortriazin, deren Menge jedoch so gering gehalten werden sollte, daß die Endprodukte durch Vernetzung nicht unlöslich in organischen Lösungsmitteln werden. Die Polyhalogenverbindungen (III) können einzeln oder auch im Gemisch eingesetzt werden.

Die Halogenalkylsilane (II) und die Polyhalogenverbindungen (III) werden bevorzugt im Molverhältnis von 1:0 bis 1:100, insbesondere im Molverhältnis von 1:0 bis 1:30 eingesetzt (Halogenalkylsilane: Polyhalogenverbindungen).

Die Umsetzung der Halogensilane mit den Metallpolysulfiden geschieht in üblicher Weise in Gegenwart von polaren organischen Lösungsmitteln, wie Methanol, Ethanol, n-Propanol, iso-Propanol, iso-Butanol, Amylalkohol, Hexylalkohol, n-Octanol und/oder iso-Octanol, sowie Gemische der genannten Lösungsmittel mit aromatischen, aliphatischen und/oder cyclischen Kohlenwasserstoffen, wie z.B. Toluol, Cyclohexan, Hexan, Octan. Desweiteren können eingesetzt werden: offenkettige oder cyclische Ether, wie z.B. Diethylether, Dibutylether, Tetrahydrofuran und/oder 1,3-Dioxolan. Diese gegebenenfalls ebenfalls in Mischungen mit den anderen genannten Lösungsmittel. Wurde die Entwässerung des Metallsulfids bzw. Metallpolysulfids in einem unpolaren aprotischen Lösungsmittel durchgeführt, so empfiehlt sich die Zugabe eines weiteren polaren und protischen Lösungsmittels. Wird z.B. die Entwässerungen mit Xylol durchgeführt, so empfiehlt sich die nachfolgende Zugabe von z.B. Ethanol, wobei gleiche Volumenverhältnisse der Lösungsmittel gewählt werden können.

Die nach dem erfindungsgemäßen Verfahren hergestellten polysulfidischen Silylether eignen sich insbesondere zur Herstellung von Kautschukvulkanisaten. In diesem Zusammenhang wird insbesondere auf DE-A 2.255.577 und DE-A 4.406.947 verwiesen.

Die mit den polysulfidischen Silylethern hergestellten Kautschukvulkanisate eignen sich zur Herstellung von Formkörpern, z.B. fiir die Herstellung von Kabelmäntel, Schläuchen, Treibriemen, Förderbändern, Walzenbelägen, Reifen, Schuhsohlen, Dichtungsringe und Dämpfungselemente. Vorteile solcher Kautschukvulkanisate sind insbesondere zu sehen in der verbesserten Hitzebeständigkeit und der geringeren dynamischen Dämpfung sowie in der höheren Härte.

### Beispiele

### Beispiel 1

126 g Na₂S x 2,7 H₂O und 2 ml Diethylenglykol wurden in 350 ml Xylol unter Rühren am Wasserabscheider erhitzt, bis 48 ml Wasser abgeschieden waren. Man erhielt eine grobteilige Dispersion von wasserfreiem Natriumsulfid in Xylol ohne feste Ablagerungen an der Wand des Reaktionsgefäßes.

Zu dieser Dispersion gab man anschließend 350 ml abs. Ethanol und 96 g Schwefel und rührte 30 Minuten bei 70°C. Daraufhin wurde ein Gemisch aus 120,2 g 3-Chlorpropylsilan und 129,2 g Bis-(2-chlorethyl)-formal hinzugetropft und 6 Stunden bei 70 bis 80°C nachgerührt. Nach dem Filtrieren und Eindampfen bis 70°C im Vakuum erhielt man 303 g eines dunklen Öls.

### Beispiel 2

126 g Na₂S x 2,7 H₂O und 10ml Diethylenglykol wurden in 390ml Xylol unter Rühren am Wasserabscheider erhitzt bis 48 ml Wasser abgeschieden waren. Man erhielt eine helle feinteilige Dispersion von wasserfreiem Natriumsulfid in Xylol ohne feste Ablagerungen an der Wand des Reaktionsgefäßes.

Zu dieser Dispersion gab man anschließend 200 ml abs. Ethanol und 96 g Schwefel und rührte 30 Minuten bei 70°C. Daraufhin wurde ein Gemisch aus 120,2 g 3-Chlorpropylsilan und 129,2 g Bis-(2-chlorethyl)-formal hinzugetropft und 6 Stunden bei 70 bis 80°C nachgerührt. Nach dem Filtrieren und Eindampfen bis 70°C im Vakuum erhielt man 325 g eines dunklen Öls.

### Beispiel 3

504 g Na₂S x 2,7 H₂O und 40,3 g Dipropylenglykol wurden in 1 Xylol unter Rühren am Wasserabscheider gekocht bis 194 ml Wasser abgeschieden waren. Man erhielt eine grobteilige Dispersion von wasserfreiem Natriumsulfid in Xylol ohne Ablagerungen an der Wand des Reaktionsgefäßes.

Zu dieser Dispersion gab man anschließend 11 abs. Ethanol und 192 g Schwefel und rührte 30 Minuten bei 70-80°C. Daraufhin wurde ein Gemisch aus 480,8 g Chlorpropyltriethoxisilan und 524 g Bis-(2-chlorethyl)-formal hinzugetropft und 16 Stunden zum Rückfluß erhitzt. Nach dem Filtrieren und Eindampfen bis 70°C im Vakuum erhielt man 955 g eines hellbraunen Öls mit der Viskosität 200 mPas.

### Beispiel 4

126 g Na₂S x 2,7 H₂O und 6,3 g Diethylenglykol wurden in 300 ml Xylol unter Rühren am Wasserabscheider gekocht bis 48 ml Wasser abgeschieden waren. Man erhielt eine helle feinteilige Dispersion von wasserfreiem Natriumsulfid in Xylol ohne Ablagerungen an der Wand des Reaktionsgefäßes.

Zu dieser Dispersion gab man anschließend 300 ml abs. Ethanol und 96 g Schwefel und rührte 30 Minuten bei 70-80°C. Daraufhin wurden 480,8 g Chlorpropyltriethoxisilan hinzugetropft und 16 Stunden bei 75°C nachgerührt. Nach dem Filtrieren und Eindampfen bis 70°C im Vakuum erhielt man 542 g eines dünnflüssigen Öls.

Analog dem Verfahren aus Beispiel 1 wurden anstelle von Diethylenglykol folgende Emulgatoren (I) eingesetzt:

| **Beispiel** | **Emulgator (I)** | **Aussehen des wasserfreien Na**_{**2**}**S** |
|---|---|---|
| 5 | Dipropylenglykol (10 g) | helle Dispersion, keine Anbackung |
| 6 | Glycerin (10 g) | helle Dispersion, keine Anbackung |
| 7 | Tetraethylenglykol (10 g) | grobe Teilchen, keine Anbackung |
| 8 | Trimethylolpropan (10 g) | feine Teilchen, keine Anbackung |
| 9 | 2-Ethylhexansäure (10 g) | feine Teilchen, keine Anbackung |

### Vergleiehsbeispiel:

Führte man die Entwässerung wie in Beispiel 1 durch, ohne jedoch Diethylenglykol zuzusetzen, so erhielt man wasserfreies Natriumsulfid, das vollständig an der Wand des Reaktionsgefäßes abgelagert war und sich nach Zusatz der weiteren Reaktionspartner nur unvollständig umsetzte. Durch Vergrößerung des Reaktionsansatzes wurden die Effekte noch deutlicher.

## Patentansprüche

1. Verfahren zur Herstellung von polysulfidischen Silylethern durch Umsetzung von Metallpolysulfiden mit Halogenalkylsilanen, **dadurch gekennzeichnet, daß** man ausgehend von wasserhaltigen Metallsulfiden und/oder Metallpolysulfiden diese zunächst in Gegenwart eines nicht wassermischbaren, organischen Lösungsmittels und in Gegenwart eines Emulgators der allgemeinen Formeln (Ia) und/oder (Ib) und/oder (Ic) 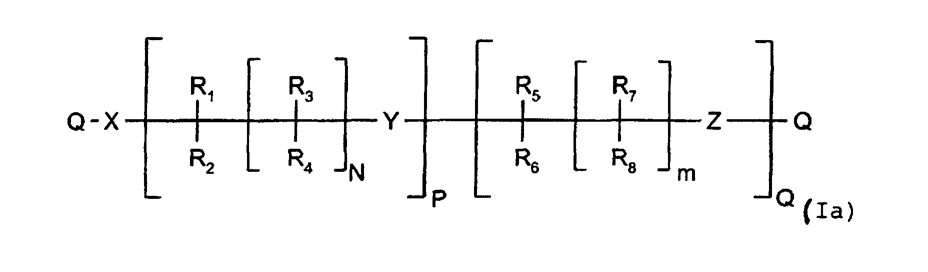 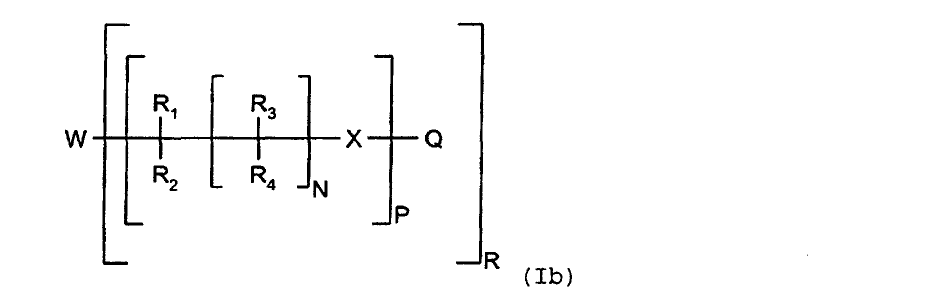
R₉-(V-Q)_{R} (Ic),
worin
R₁-R₈ unabhängig voneinander für Wasserstoff, OH, NH₂, Carbonsäure-, Sulfonsäure-, Phosphorsäure- und Phosphonsäureguppen und deren Salze, für C₁-C₃₆-Alkyl- oder Cycloalkylreste, die gegebenenfalls durch Sauerstoff-, Schwefel- oder Stickstoffatome unterbrochen oder durch weitere -OH, -NH₂, -NH-C₁-C₁₂-Alkylreste, -N(C₁-C₁₂-Alkylreste)₂, Carbonsäure-C₁-C₁₂-Alkylester, Carbonsäure-, Sulfonsäure-, Phosphorsäure- oder Phosphonsäuregruppen sowie deren Salze substituiert sein können, sowie für C₆-C₁₈-Aryl und C₇-C₂₄-Alkylarylgruppen stehen, wobei zwei benachbarte Reste jeweils auch ein cyclisches Ringsystem mit 5 bis 8 C-Atomen bilden können,
R₉ für einen C₁-C₃₆-Alkyl- oder Cycloalkylrest steht, der gegebenenfalls durch Sauerstoff-, Schwefel- oder Stickstoffatome unterbrochen sein kann, sowie für C₆-C₁₈-Aryl und C₇-C₂₄-Alkylarylgruppen steht,
X, Y, Z für Sauerstoff, -NH- oder -NR₁-, wobei R₁ die obengenannte Bedeutung hat, oder für Schwefel, für eine Gruppe der Reihe -Sₓ- (mit x = 2-8), sowie für eine Sulfonyl-, Carbonyl-, Sulfonat-, Carboxylat-, Phosphonat- oder Phosphatgruppe stehen,
W für eine Hydroxylgruppe, einen ein- bis sechswertigen C₁-C₂₄-aliphatischen-, C₅-C₂₄-cycloaliphatischen- oder C₆-C₂₄-aromatischen Kohlenwasserstoff- oder für einen Alkoholatrest, eine Aminogruppe oder eine NH(C₁-C₁₈)-, N(C₁-C₁₈)₂-, N⁺(C₁-C₂₄)₄-Alkyl-, -Alkylaryl- oder -Arylgruppe oder einen Poly-(C₂-C₁₈-alkylen)-polyaminrest, mit einem mittleren Molekulargewicht von 60 bis 100000, für eine Carbonylgruppe, einen ein- bis sechswertigen aliphatischen, cycloaliphatischen oder aromatischen (C₁-C₃₆)-(COO-)_{y}-Rest (mit y = 1 bis 6) oder eine Carbonsäuregruppe, Phosphonsäuregruppe, Phosphorsäuregruppe oder Sulfonsäuregruppe oder deren Salze steht,
V für eine Carboxylat-, Sulfonat- oder Phosphatgruppe steht,
Q für Wasserstoff oder ein Metall der 1., 2. oder 3.-Hauptgruppe des Periodensystems der Elemente (Mendelejew) steht,
n,m unabhängig voneinander für ganze Zahlen zwischen 0 - 21,
p eine ganze Zahl zwischen 1 - 1 000,
q eine ganze Zahl zwischen 0 - 6,
r für eine ganze Zahl zwischen 1 - 6,
bei Temperaturen von 90 bis 220°C, gegebenenfalls im Vakuum oder unter Druck, entwässert, anschließend bei Einsatz von Metallsulfiden diese mit Schwefel zu Metallpolysulfiden umsetzt, und danach die erhaltenen, entwässerten Metallpolysulfide mit Halogenalkylsilanen, gegebenenfalls in Gegenwart von Polyhalogenverbindungen, bei Temperaturen von 20 bis 150°C in die entsprechenden polysulfidischen Silylether überführt, wobei die Emulgatoren in Mengen von 0,1 - 300 Gew.-%, bezogen auf wasserfreies Metallsulfid und/oder Metallpolysulfid, eingesetzt werden.

2. Verfahren nach Anspruch 1, **dadurch gekennzeichnet, daß** man die Entwässerung der wasserhaltigen Metallsulfide und/oder Metallpolysulfide bei Temperaturen von 100 bis 200°C durchführt.

3. Verfahren nach Ansprüchen 1 und 2, **dadurch gekennzeichnet, daß** 2 bis 20 Gew.-Teile an organischen Lösungsmitteln, bezogen auf 1 Gew.-Teil eingesetztes wäßriges Metallsulfid und/oder Metallpolysulfid, verwendet werden.

## Claims

1. A method of preparing polysulphidic silyl ethers by the reaction of metal polysulphides with halogenoalkylsilanes, **characterised in that**, starting from hydrated metal sulphides and/or metal polysulphides, these are first dehydrated in the presence of an organic solvent which is immiscible with water and in the presence of an emulsifier of general formulae (Ia) and/or (Ib) and/or (Ic): 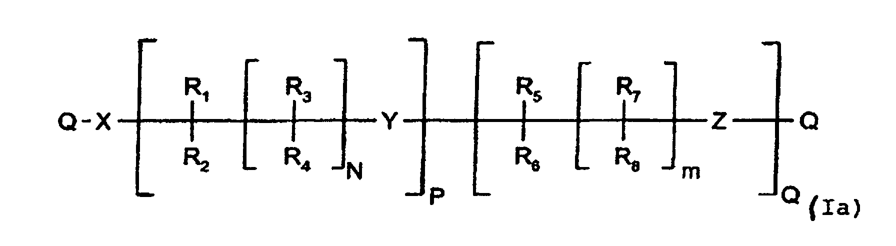 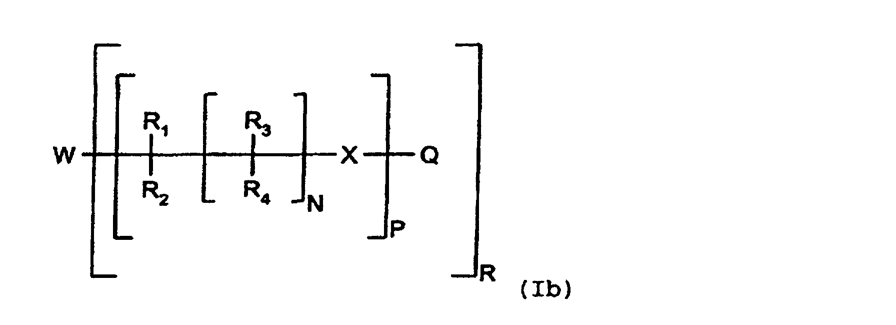
**R**_{**9**}**-(V-Q)**_{**R**} (Ic),
wherein
R₁-R₈ independently of each other, represent hydrogen, OH, NH₂, carboxylic acid, sulphonic acid, phosphoric acid and phosphoric acid groups and salts thereof, C₁-C₃₆ alkyl or cycloalkyl radicals which are optionally interrupted by oxygen, sulphur or nitrogen atoms or which may optionally be substituted by further -OH, -NH₂, -NH-C₁-C₁₂ alkyl radicals, -N(C₁-C₁₂ alkyl radicals)₂, carboxylic acid C₁-C₁₂ alkyl esters, carboxylic acid, sulphonic acid, phosphoric acid or phosphonic acid groups and salts thereof, as well as C₆-C₁₈ aryl and C₇-C₂₄ alkylaryl groups, wherein two adjacent radicals may also in each case form a cyclic ring system containing 5 to 8 C atoms,
R₉ represents a C₁-C₃₆ alkyl or cycloalkyl radical which may optionally be interrupted by oxygen, sulphur or nitrogen atoms, as well as C₆-C₁₈ aryl and C₇-C₂₄ alkylaryl groups,
X, Y, Z represent oxygen, -NH- or -NR₁-, wherein R₁ has the aforementioned meaning, or sulphur, a group from the -Sₓ- series (where x = 2-8), as well as a sulphonyl, carbonyl, sulphonate, carboxylate, phosphonate or phosphate group,
W represents a hydroxyl group, a mono- to hexavalent C₁-C₂₄ aliphatic, C₅-C₂₄ cycloaliphatic or C₆-C₂₄ aromatic hydrocarbon radical, or an alcohol radical, an amino group or an NH(C₁-C₁₈), NH(C₁-C₁₈)₂-, N+(C₁-C₂₄)₄ alkyl, alkylaryl or aryl group or a poly-(C₂-C₁₈ alkylene)-polyamino radical with an average molecular weight of 60 to 100,000, a carbonyl group, a mono- to hexavalent aliphatic, cycloaliphatic or aromatic (C₁-C₃₆)-(COO-)_{y} radical (where y = 1 to 6), or a carboxylic acid group, phosphonic acid group, phosphoric acid group or sulphonic acid group or salts thereof,
V represents a carboxylate, sulphonate or phosphate group,
Q represents hydrogen or a metal of the 1st, 2nd or 3rd main group of the periodic table of the elements (Mendeleev),
n, m independently of each other, represent integers between 0 and 21,
p denotes an integer between 1 and 1000,
q denotes an integer between 0 and 6, and
r represents an integer between 1 and 6.
at temperatures of 90 to 220°C, optionally in vacuum or under pressure, if metal sulphides are used these are subsequently reacted with sulphur to form metal polysulphides, and thereafter the dehydrated metal polysulphides obtained are converted into the corresponding polysulphidic silyl ethers with halogenoalkylsilanes, optionally in the presence of polyhalogen compounds, at temperatures of 20 to 150°C, wherein the emulsifiers are used in amounts of 0.01 - 300 % by weight with respect to the anhydrous metal sulphide and/or metal polysulphide.

2. A method according to claim 1, **characterised in that** dehydration of the hydrated metal sulphides and/or metal polysulphides is effected at temperatures of 100 to 200°C.

3. A method according to claims 1 and 2, **characterised in that** 2 to 20 parts by weight of organic solvents are used with respect to 1 part by weight of the hydrated metal sulphide and/or metal polysulphide which is used.

## Revendications

1. Procédé pour la préparation d'éthers silyliques polysulfurés par réaction de polysulfures métalliques avec des halogénoalkylsilanes, **caractérisé en ce que**, partant de sulfures métalliques et/ou polysulfures métalliques aqueux, on les déshydrate d'abord à des températures de 90 à 220°C, éventuellement sous vide ou sous pression en présence d'un solvant organique non miscible à l'eau et en présence d'un agent émulsionnant répondant à l'une des formules (Ia) et/ou (Ib) ef/ou (Ic) ci-après 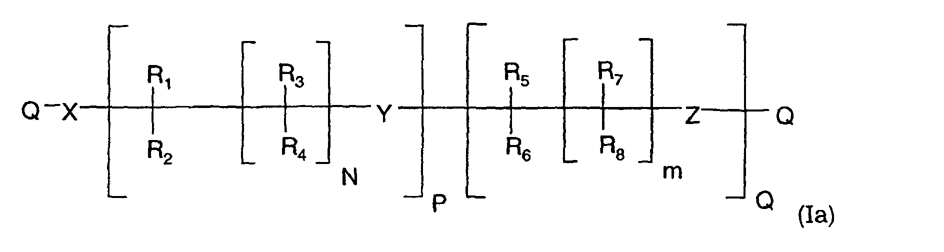 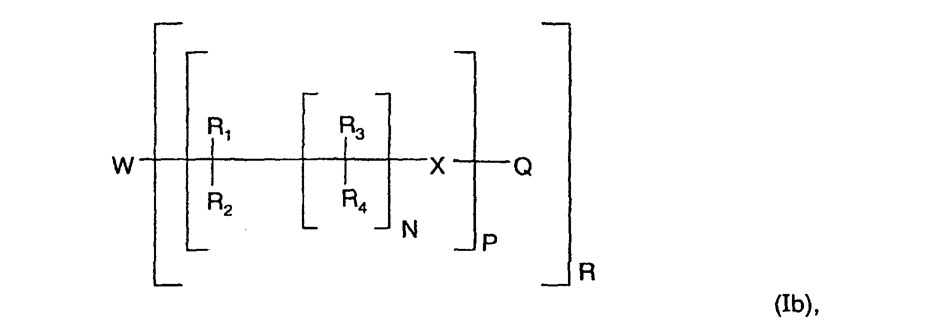
R₉-(V-Q)_{R} (Ic),
dans lesquelles
R₁ à R₈ représentent chacun, indépendamment les uns des autres, l'hydrogène, un groupe OH, NH₂, acide carboxylique, acide sulfonique, acide phosphorique ou acide phosphonique, éventuellement à l'état de sel, un groupe alkyle en C₁-C₃₆ ou cycloalkyle en C₁-C₃₆ qui peut le cas échéant être interrompu par des atomes d'oxygène, de soufre ou d'azote ou être substitué par d'autres groupes -OH, -NH₂, -NH-alkyle en C₁-C₁₂, -N(alkyle en C₁-C₁₂)₂, carboxylate d'alkyle en C₁-C₁₂, acide carboxylique, acide sulfonique, acide phosphorique ou acide phosphonique, éventuellement à l'état de sels, ou bien un groupe aryle en C₆-C₁₈ ou alkylaryle en C₇-C₂₄, deux groupes voisins pouvant également former dans chaque cas un système cyclique en C₅-C₈.
R₉ représente un groupe alkyle ou cycloalkyle en C₁-C₃₆ éventuellement interrompu par des atomes d'oxygène, de soufre ou d'azote, ou un groupe aryle en C₆-C₁₈ ou alkylaryle en C₇-C₂₄,
X, Y, Z représentent chacun l'oxygène, un groupe -NH, ou -NR₁- dans lequel R₁ a les significations indiquées ci-dessus, ou le soufre, ou un groupe de la série -Sₓ- (avec x = 2 à 8), ou un groupe sulfonyle, carbonyle, sulfonate, carboxylate, phosphonate ou phosphate,
W représente un groupe hydroxy, un radical hydrocarboné ou un radical d'alcoolate mono- à hexa-valent aliphatique en C₁-C₂₄, cycloaliphatique en C₅-C₂₄ ou aromatique en C₆-C₂₄, un groupe amino ou un groupe NH(alkyle, alkylaryle ou aryle en C₁-C₁₈)-, N(alkyle, alkylaryle ou aryle en C₁-C₁₈)₂-, N⁺(alkyle, alkylaryle ou aryle en C₁-C₂₄)₄- ou un radical de poly(akylène en C₂-C₁₈)polyamine à un poids moléculaire moyen de 60 à 100 000, un groupe carbonyle, un radical mono- à hexavalent aliphatique, cycloaliphatique ou aromatique en C₁-C₃₆-(COO)_{y} (avec y = 1 à 6) ou un groupe acide carboxylique, acide phosphonique, acide phosphorique ou acide sulfonique éventuellement à l'état de sel,
V représente un groupe carboxylate, sulfonate ou phosphate,
Q représente l'hydrogène ou un métal du premier, du deuxième ou du troisième groupe principal de la Classification Périodique des éléments (Mendeleïev),
n, m représentent chacun, indépendamment l'un de l'autre, un nombre entier allant de 0 à 21,
p est un nombre entier allant de 1 à 1 000,
q est un nombre entier allant de 0 à 6,
r est un nombre entier allant de 1 à 6,
et lorsqu'on est parti d'un sulfure métallique, on convertit ce dernier par réaction avec le soufre en polysulfure métallique, puis on convertit les polysulfures métalliques déshydratés ainsi obtenus en les éthers silyliques polysulfurés correspondants par réaction avec des halogénoalkylsilanes, éventuellement en présence de dérivés polyhalogénés, à des températures de 20 à 150°C, les agents émulsionnants étant mis en oeuvre en quantité de 0,1 à 300 % du poids du sulfure métallique et/ou du polysulfure métallique anhydre.

2. Procédé selon la revendication 1, **caractérisé en ce que** la déshydratation des sulfures métalliques et/ou polysulfures métalliques aqueux est réalisée à des températures de 100 à 200°C.

3. Procédé selon les revendications 1 et 2, **caractérisé en ce que** l'on utilise de 2 à 20 parties en poids de solvants organiques pour 1 partie en poids du sulfure métallique et/ou polysulfure métallique aqueux mis en oeuvre.
